# EUROPEAN PATENT APPLICATION

(11) **EP 3 572 279 A1**
(43) Date of publication of application: **27.11.2019**
(21) Application number: 19175493.6
(22) Date of filing: 20.05.2019
(51) Int. Cl.: B60Q 1/12

(54) **VEHICLE LAMP CONTROLLER, METHOD FOR CONTROLLING VEHICLE LAMPS AND VEHICLE LAMP SYSTEM**

(30) Priority: 23.05.2018 JP 2018099038
(71) Applicant: STANLEY ELECTRIC CO., LTD., Tokyo 153-8636 (JP)
(72) Inventor: FURUGORI, Yudai, Tokyo, 153-8636 (JP)
(74) Representative: Emde, Eric

(57) **Abstract**

A vehicle lamp controller (2) for controlling a light distribution angle of right and left lamp units (15R, 15L) in accordance with a traveling direction of an own vehicle (110) incorporating the lamp units (15R, 15L), the vehicle lamp controller (2) comprising:
a traveling angle-sensing part (3) detecting a traveling angle of the own vehicle (110);
a setup part (18) detecting whether a traveling road of the own vehicle (110) is a straight road or a curved road, variably setting up thresholds, setting up a first threshold (3FT) as one of the thresholds when the traveling road is the curved road, and setting up a second threshold (3ST) as another of the thresholds when the traveling road is the straight road;
a lighting control part (19) outputting a driving signal to the lamp units (15R, 15L) so as to direct the light distribution angle of the lamp units (15R, 15L) toward the traveling direction of the own vehicle (110) when the traveling angle detected by the traveling angle-sensing part (3) is larger than the first threshold (3FT) or the second threshold (3ST);
and characterized in that the second threshold (3ST) is set up at a larger value than the first threshold (3FT).

## Description

### BACKGROUND

### FIELD OF ART

The present invention relates to vehicle lamp controllers for controlling vehicle lamps incorporated into an own vehicle to control light distribution angles of the vehicle lamps in accordance with a travelling direction of the own vehicle, and relates to method for controlling the vehicle lamps and to vehicle lamp systems including the vehicle lamp controllers along with the vehicle lamps.

Vehicle lamp controllers, which control light distribution angles of vehicle lamps in accordance with a travelling direction of an own vehicle, are well known. For example, a conventional vehicle cornering lamp, which may vary a light-irradiating direction of lamps when an own vehicle travels on a curved roadway, is disclosed in Patent Document No. 1 (Japanese Patent No. 2,633,169). The conventional vehicle cornering lamp discloses: an angle rate detection means detecting an angle rate of the own vehicle; a vehicle speed detection means detecting a vehicle speed of the own vehicle; a target location calculation means calculating a target location of the lamps based on the angle rate and the vehicle speed; and a light-emitting control means controlling a light-emitting angle of the lamps in accordance with the target location of the lamps.

Hence, the vehicle cornering lamp may vary the light-emitting angle of the lamps along the curved roadway on which the own vehicle travels. A conventional light distribution controller of vehicle headlights, which may vary a light-emitting direction of headlights when an own vehicle travels on a curved roadway, is disclosed in Patent Document No. 2 (Japanese Patent No. 3,690,099). FIG. 9 is a schematic block diagram depicting the conventional light distribution controller disclosed in Patent Document No. 2.

The light distribution controller discloses: an imaging equipment 50 detecting white lines shown on a driving lane of an own vehicle; a driving lane calculation means 53 calculating a center line of the driving lane on which the own vehicle should travel in accordance with said detected white lines; a vehicle speed sensor 51 detecting a vehicle speed of the own vehicle; a steering angle sensor 52 detecting a steering angle when the own vehicle travels; a target light-emitting location means 54 calculating a target light-emitting direction of a vehicle headlight 56 incorporated into the own vehicle in accordance with the vehicle speed and the steering angle in addition to the white lines of the driving lane; and a headlight driving means 55 controlling the vehicle headlight 56 in accordance with the target light-emitting direction calculated by the target light-emitting location means 54.

In addition, the conventional light distribution controller also discloses a lateral discrepancy sensor 57, which may detect a lateral discrepancy of the own vehicle with reference with the center line of the driving lane for correcting the target light-emitting direction.

However, while the light distribution controller described above works, the light distribution controller sometimes may provide drivers of the own vehicles with a feeling of strangeness. For example, when a shift of light distribution patterns generated by the light distribution controller is too short, the light distribution controller may operate very often in accordance with a small alteration of the steering angle and the like even when the own vehicles travel on a straight road with a good view. In addition, when the own vehicles travel on a blind curved road and when the shift of the light distribution patterns generated by the light distribution controller is too long, the light distribution controller may cause any trouble such that may not provide the drivers with preferable light distribution patters along the curved road

The above-referenced Patent Documents and additional Documents are listed below and are hereby incorporated with their English abstracts and specifications in their entireties.
1. Patent Document No. 1: Japanese Patent No. 2,633,169.
2. Patent Document No. 2: Japanese Patent No. 3,690,099.
3. Patent Document No. 3: U.S Patent No. 9,849,827.
4. Patent Document No. 4: U.S. Patent No. 9,606,351.
5. Patent Document No. 5: U.S. Patent No. 9, 738, 214.

The present invention has been devised to consider the above and other problems, characteristics and features. Exemplary embodiments of the present invention can include providing the drivers with the preferable light distribution patters while avoiding the troubles such as described above.

### SUMMARY OF THE INVENTION

According to an aspect of the presently invention, an exemplary vehicle lamp controller for controlling a light distribution angle of right and left lamp units in accordance with a traveling direction of an own vehicle incorporating the lamp units, the vehicle lamp controller comprising: a traveling angle-sensing part detecting a traveling angle of the own vehicle; a setup part detecting whether a traveling road of the own vehicle is a straight road or a curved road, variably setting up thresholds, setting up a first threshold as one of the thresholds when the traveling road is the curved road, and setting up a second threshold as another of the thresholds when the traveling road is the straight road; a lighting control part outputting a driving signal to the lamp units so as to direct the light distribution angle of the lamp units from an initial light distribution angle toward the traveling direction of the own vehicle when the traveling angle detected by the traveling angle-sensing part is larger than the first threshold or the second threshold; and characterized in that the second threshold is set up at a larger value than the first threshold.

According to one of other aspects of the presently invention, an exemplary method for controlling a light distribution angle of right and left lamp units in accordance with a traveling direction of an own vehicle incorporating the lamp unit, wherein the method is to output a driving signal to the lamp unit so as to direct the light distribution angle of the lamp units from an initial light distribution angle toward the traveling direction of the own vehicle when a traveling angle of the own vehicle is larger than a predetermined threshold, the control method for the lamp unit comprising: a first threshold employed when the own vehicle travels on a curved road; a second threshold employed when the own vehicle travels on a straight road; and characterized in that the second threshold is larger than the first threshold.

According to another of the other aspects of the presently invention, an exemplary vehicle lamp system including the vehicle lamp controller of the above-described aspect, further comprising the lamp units controlled by the vehicle lamp controller.

According to the above-described aspects, when the traveling road is the straight road, preferable light distribution angles can be set up in the traveling direction of the own vehicle determined with reference to the second threshold, which is set up at a relatively large threshold, and when the traveling road is also the curved road, the preferable light distribution angles can be set up in the traveling direction of the own vehicle determined with reference to the first threshold, which is set up at a relatively small threshold. Additionally, when it is difficult to determine whether the traveling road is the straight road or not such as an intersection, the second threshold can be changed so as to maintain the preferable light distribution patterns even when the traveling road varies from the straight road to the curved road. Thus, the present invention can provide preferable light distribution patterns for drivers of the own vehicle and other vehicles moving in front of the own vehicle.

### BRIEF DESCRIPTION OF THE DRAWINGS

These and other characteristics and features of the present invention will become clear from the following description with reference to the accompanying drawings, wherein:
FIG. 1 is a schematic block diagram showing an exemplary embodiment of a vehicle lamp system made in accordance with principles of the present invention;
FIGs. 2a and 2b are schematic illustrations depicting image data caught by an imaging unit shown in FIG. 1 when an own vehicle incorporating the vehicle lamp system of FIG. 1 travels on a straight road and when the own vehicle travels on a curved road, respectively;
FIG. 3 is an explanatory diagram for explaining an optical axis of an irradiating light emitted from each of a left lamp unit and a right lamp unit shown in FIG. 1;
FIG. 4 is a graph showing exemplary relations between a light distribution angle and a steering angle when the own vehicle travels on the curved road and when the own vehicle travels on the straight road;
FIG. 5 is a flow chart showing an exemplary schematic behavior of the interface controller in the vehicle lamp system shown in FIG. 1;
FIG. 6 is a schematic diagram depicting an exemplary light distribution pattern formed by the vehicle lamp system when the lamp system is used as an Adaptive Driving Beam (ADB);
FIG. 7 is a schematic block diagram showing an exemplary variation of the vehicle lamp system shown in FIG. 1;
FIG. 8 is an exemplary explanatory diagram when a second threshold varies in the vehicle lamp system; and

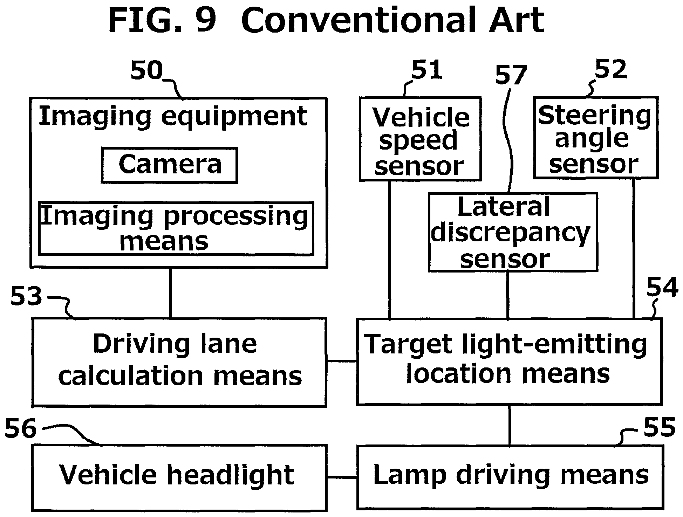

FIG. 9 is a schematic block diagram depicting a conventional light distribution controller.

### DETAILED DESCRIPTION OF EXEMPLARY EMBODIMENTS

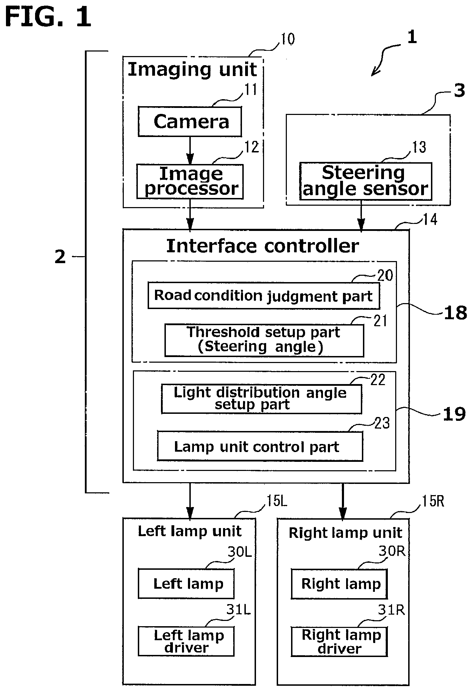

The present invention will now be described in detail with reference to FIG. 1 to FIG. 8, in which the same, similar, or corresponding elements use the same reference marks. FIG. 1 is a schematic block diagram showing an exemplary embodiment of a vehicle lamp system made in accordance with principles of the present invention. The vehicle lamp system 1 can include a right lamp unit 15R and a left lamp unit 15L and a vehicle lamp controller 2 for controlling the right and the left lamp units 15R, 15L

The vehicle lamp system 1 can enable each of the right and left lamp units 15R, 15L to form preferable light distribution patterns in a traveling direction of an own vehicle incorporating the vehicle lamp system 1 by controlling a light-irradiating direction of the right and left lamp units 15R, 15L. The vehicle lamp controller 2 can include: an imaging unit 10 detecting road conditions as image data; a traveling angle-sensing part 3 detecting a traveling angle of the own vehicle; an interface controller 14 inputting the image data from the imaging unit 10, inputting the traveling angle from the traveling angle-sensing part 3 and outputting a lamp driving signal; and the right lamp unit 15R and the left lamp unit 15L inputting the lamp driving signal from the interface controller 14 and proving various light distribution patterns in accordance with the lamp driving signal.

In this case, the traveling angle-sensing part 3 can include a steering angle sensor 13, which detects a steering angle of a steering wheel of the own vehicle as the traveling angle of the traveling angle-sensing part 3,and outputs the steering angle to the interface controller 14. The imaging unit 10 can include a camera 11 and an image processor 12, and the camera can be attached to a predetermined position (e.g., an upside of a front windshield) of the own vehicle so as to photograph things in the traveling direction of the own vehicle. The image processor 12 can detect oncoming vehicles, white lines, yellow lines, guardrails, curbstones and the like by manipulating an image processing algorithm such as feature extractions with respect to the things photographed by the camera 11.

The steering angle sensor 13 can detect the steering angle of the steering wheel of the own vehicle. The steering angle can be a plus angle such as one degree, for example, when the steering wheel turns in a clockwise direction, and when the steering wheel turns in a counterclockwise direction, the steering angle can detected as a minus angle such as minus two degrees, etc.The interface controller 14 can control operations of the vehicle lamp system 1 such as the right and left lamp units 15R, 15L, etc. The interface control 14 can employ a computer system including a central processing unit (CPU), a read only memory (ROM) and a random access memory (RAM). The interface controller 14 can control the operations of the vehicle lamp system 1 by executing a computer software program for the computer system.

The interface control 14 can include a setup part 18 including a road condition judgement part 20 and a threshold setup part 21. The road condition judgement 20 can detect whether a traveling road of the own vehicle is a substantially straight or a curved road, and also can detect whether the oncoming vehicle approaches toward the own vehicle on an oncoming lane, which is located adjacent the traveling road. The threshold setup part 21 can set up steering angle thresholds for varying the lamp driving signal, which is output to the right and left lamp units 15R, 15L, to change the light distribution patterns in accordance with detections whether the traveling road of the own vehicle is the substantially straight or the curved road.

In addition, the interface control 14 can also include a lighting control part 19 including a light distribution angle setup part 22 and a lamp unit control part 23. The light distribution angle setup part 22 can output a light distribution angle in accordance with the detections whether the traveling road is the substantially straight or the curved road, and the lamp unit control part 23 can output the lamp driving signal to the right and left lamp units 15R, 15L.

The road condition judgement part 20 can detect whether the traveling road of the own vehicle is the substantially straight or the curved road in accordance with a shape of the white lines and the like, which is detected by the image processor 12 as described above. The threshold setup part 21 can adapt the steering angle thresholds, which are referred when the light distribution angle setup part 22 sets up the light distribution angle, in accordance with detecting results output from the road condition judgement part 20.

Specifically, the threshold setup part 21 can set up a first variable threshold as one of the steering angle thresholds when the traveling road is the substantially straight, and also can set up a second variable threshold as another of the steering angle thresholds when the traveling road is the curved road. In this case, the second variable threshold can be set up at a larger angle than the first variable threshold. Each of the first threshold and the second threshold can be set up at an appropriate angle based on evaluation results of a driving test, a computer simulation, etc. In this exemplary embodiment, the first initial threshold is set up at plus 8 degrees and minus 8 degrees (± 8°), and the second initial threshold is set up at plus 18 degrees and minus 12 degrees (± 12°).

The light distribution angle setup part 22 cannot vary the light distribution angle with maintenance of an initial light distribution angle when the steering angle of the own vehicle, which is detected by the steering angle sensor 13, is within the first threshold (± 8°) when the traveling road is the curved road, and also is within the second threshold (± 12°) when the traveling road of the own vehicle is the straight road. However, when the traveling road is beyond the first threshold (± 8°) when the traveling road is the curved road, or the traveling road is beyond the second threshold (± 12°) when the traveling road is the straight road, the light distribution angle setup part 22 can vary the light distribution angle from the initial light distribution angle so that the right and left lamp units 15R, 15L shift the light distribution pattern in the traveling direction of the own vehicle. Thereby, the vehicle lamp system 1 can provide the driver of the own vehicle with the preferable light distribution patterns for a safe driving.

The lamp unit control part 23 can produce the lamp driving signal to control each of the right and left lamp units 15R, 15L in accordance with the light distribution angle set up by the light distribution angle setup part 22, and can output the lamp driving signal to each of the right and left lamp units 15R, 15L. Therefore, a pair of the right and left lamp units 15R, 15L can form the light distribution pattern along the traveling road in the traveling direction of the own vehicle.

The right lamp unit 15R can include a right lamp 30R and a right lamp driver 31R in order for the right lamp 30R to form the preferable light distribution patterns, and can be attached to a right front of the own vehicle. Similarly, the left lamp unit 15L can also include a left lamp 30L and a left lamp driver 31L in order for the right lamp 30L to form the preferable light distribution patterns, and can be attached to a left front of the own vehicle.

Each of the right and left lamps 30R, 30L can form the preferable light distribution patterns, and each of the right and left lamp driver 31R, 31L can drive a respective one of the right and left lamps 30R, 30L to form the preferable light distribution patterns by rotating the respective one. Additionally, each of the right and left lamp drivers 31R, 31L can also drive a respective one of the right and left lamps 30R, 30L by using a micro mirror. A vehicle headlight system rotating a lamp is disclosed in Patent Document No. 3 (U.S. Patent No. 9,849,827), and a vehicle headlight using the micro mirror is disclosed in Patent Document No. 4 (U.S. Patent No. 9,606,351), which are owned by Applicant of this invention. Details of the above-described methods will be abbreviated here.

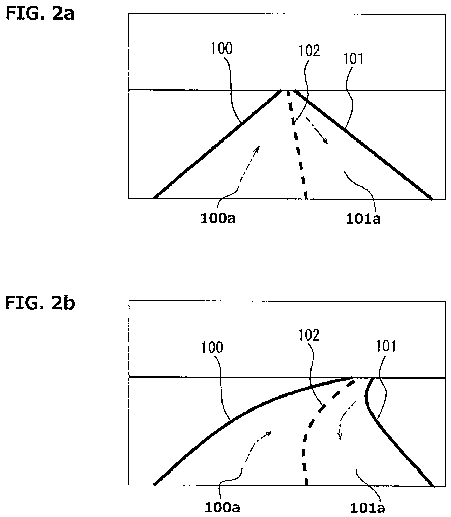

Next, an exemplary detecting method whether the traveling road of the own vehicle is the straight road will now be described with reference to FIGs. 2a and 2b. FIG. 2a shows an exemplary case where the traveling road is the straight road, and FIG. 2b shows another exemplary case where the traveling road is the curved road. The image data output from the imaging unit 10 may include a first white line 100 extending along a traveling lane 100a on which the own vehicle travels, a second white line 101 extending along an oncoming lane 101a on which oncoming vehicles travels, and a center white line 102 extending between the traveling lane 100a and the oncoming lane 101a.

In this case, the road condition judgement part 20 can detect whether the traveling road is the straight road by using at least one of the first line 100, the second line 101 and the center white line 102. For example, the road condition judgement part 20 can detect that the traveling road is the straight road when a curvature radius of the first white line 100 calculated is smaller than 1000 meters, and also can detect that the traveling road is the curved road when the curvature radius of the first white line 100 calculated is larger than 1000 meters. Additionally, the image processor 12 can also detect straight lines of the white lines, guardrails, curbstones and the like by using Hough-conversion method, etc.

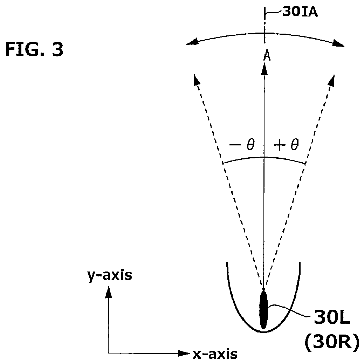

FIG. 3 is an explanatory diagram for explaining an optical axis of an irradiating light emitted from each of the left lamp 30L and the right lamps 30R shown in FIG. 1. An x-axis can substantially correspond to a horizontal direction of the own vehicle incorporating the left and right lamps 30L, 30R, and a y-axis can substantially correspond to a front-back direction of the own vehicle. Each of the left and right lamps 30L, 30R can include an optical axis A in the irradiating light emitted from each of the left lamp 30L and the right lamp 30R, and the optical axis A can be located in a substantially parallel direction with the y-axis when the own vehicle travels on the straight road.

The above-described initial light distribution angle 30IA can be set up so that the optical axis A is located in the substantially parallel direction with the y-axis, and therefore can correspond substantially to the optical axis A as shown in FIG. 3. When the own vehicle turns in a rightward direction of the own vehicle, the optical axis A can be set up at the light distribution angle as +θ degrees in a clockwise direction with reference to the y-axis (the initial light distribution angle 30IA). When the own vehicle turns in a leftward direction of the own vehicle, the optical axis A can be set up at the light distribution angle as -θ degrees in a counterclockwise direction with reference to the y-axis. The larger the steering angle, which is detected by the steering angle sensor 13, is, the larger θ can become.

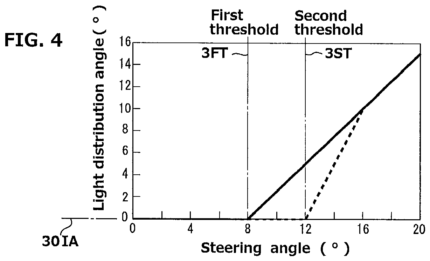

FIG. 4 is a graph showing exemplary relations between the light distribution angle and the steering angle when the own vehicle travels on the curved road and when the own vehicle travels on the straight road, wherein each of the steering angle of a horizontal axis and the light distribution angle of a vertical axis is shown by an absolute value. Accordingly, the relations between the steering angle and the light distribution angle can apply when the own vehicle turns in the rightward direction and in the leftward direction and also when the own vehicle travels on the straight road. A solid line shown in FIG. 4 shows the relations between the steering angle and the light distribution angle when the first threshold 3FT is used while the interface controller 14 detects that the own vehicle travels on the curved road.

The light distribution angle can maintain zero degree of the initial light distribution angle 30IA when the steering angle is smaller than 8 degrees, because the first threshold 3FT is set up at 8 degrees. When the steering angle exceeds 8 degrees of the first threshold 3FT, the light distribution angle can gradually increase from zero degree of the initial light distribution angle 30IA in proportion to the steering angle. A dotted line shown in FIG. 4 shows the relations between the steering angle and the light distribution angle when the second threshold 3ST is used while the interface controller 14 detects that the own vehicle travels on the straight road. The light distribution angle can maintain zero degree of the initial light distribution angle 30IA when the steering angle is smaller than 12 degrees because the second threshold 3ST is set up at 12 degrees. When the steering angle exceeds 12 degrees of the second threshold 3ST, the light distribution angle can gradually increase from zero degree of the initial light distribution angle 30IA in proportion to the steering angle.

When the second threshold 3ST is used, the light distribution angle can gradually increase from zero degree of the initial light distribution angle 30IA in proportion to the steering angle, instead of using the relations between the steering angle and the light distribution angle shown by the solid line after the steering angle exceeds 12 degrees of the second threshold 3ST. Thereby, the vehicle lamp system 1 can prevent the drivers of the own vehicle from being bothered by the feeling of strangeness such that exponentially change the light distribution angle once the steering angle exceeds the second threshold 3 ST. An increase rate of the light distribution angle when the second threshold 3ST is used (the dotted line) can become larger than that when the first threshold 3FT is used (the solid line).

When the steering angle exceeds approximately 16 degrees, which is a point where the solid line and the dotted line intersect, the light distribution angle can be set up by the same increase rate as the solid line even when the second threshold is used (dotted line). In the exemplary relations between the light distribution angle and the steering angle shown in FIG. 4, the increase rate is straight. However, the increase rate can be stepwise, curve, etc.

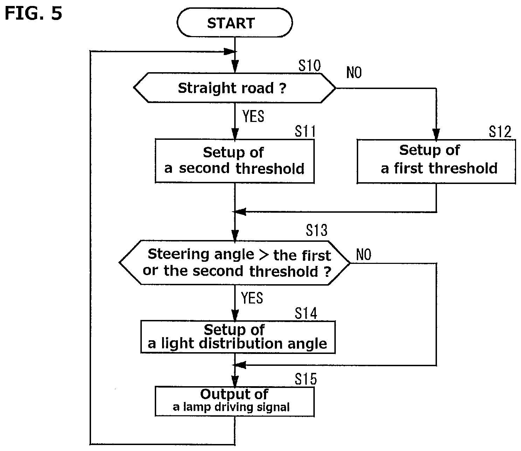

Next, an exemplary basic operation of the interface controller 14 of the vehicle lamp system 1 will now be described with reference to FIG. 5. An exemplary flow of FIG. 5 shows a schematic behavior of the interface controller 14, and therefore can include other processing information in the absence of a contraction to the basic operation.

The road condition judgement part 20 can detect whether the traveling road of the own vehicle is the substantially straight or the curved road in accordance with the image data output from the imaging unit 10 (Step S10). In this case, the road condition judgement part 20 can refer the steering angle output from the steering angle sensor 13 (Step S10).

When the road condition judgement part 20 detects that the traveling road is the substantially straight (Step S10: YES), the threshold setup part 21 can set up the second threshold 3ST for the light distribution angle setup part 22 (Step S11). When the road condition judgement part 20 detects that the traveling road is not the substantially straight, that is, the traveling road is the curved road (Step S10: NO), the threshold setup part 21 can set up the first threshold 3FT for the light distribution angle setup part 22 (Step S12).

Next, the light distribution angle setup part 22 can detect whether the steering angle output from the steering angle sensor 13 exceeds the first threshold 3FT or the second threshold 3ST (Step S13). When the steering angle output from the steering angle sensor 13 exceeds the first threshold 3FT (Step S13: YES), the light distribution angle setup part 22 can set up the light distribution angle in accordance with the solid line shown in FIG. 4, and when the steering angle output from the steering angle sensor 13 exceeds the second threshold 3ST (Step S13: YES), the light distribution angle setup part 22 can set up the light distribution angle in accordance with the dotted line shown in FIG. 4 (Step S14).

When the steering angle output from the steering angle sensor 13 is smaller than the first threshold 3FT (Step S13: NO), the light distribution angle setup part 22 cannot newly set up the light distribution angle and can maintain a previous light distribution angle such as the initial light distribution angle 30IA described above. The lamp unit control part 23 can produce the lamp driving signal to control the right and left lamp units 15R, 15L in accordance with the light distribution angle set up (or maintained) by the light distribution angle setup part 22, and can output the lamp driving signal to the right and left lamp units 15R, 15L (Step S15).

The right and left lamp units 15R, 15L can form the light distribution patterns along the traveling road in the traveling direction of the own vehicle in accordance with the lamp driving signal output from the lamp unit control part 23. The right and left lamp units 15R, 15L can provide the driver of the own driver with the preferable light distribution pattern by repeating the above-described Step S10 to Step S15.

According to the above exemplary embodiment, when the traveling road is the straight road, the vehicle lamp controller 2 can determine the light distribution angle with reference with the second threshold 3ST, which is set up at a relatively large threshold. Accordingly, the vehicle lamp system 1 can prevent the vehicle lamp controller 2 from frequently varying the light distribution angle. When the traveling road is the curved road, the vehicle lamp controller 2 can determine the light distribution angle with reference with the first threshold 3FT, which is set up at a relatively small threshold.

Therefore, the vehicle lamp system 1 can enable the vehicle lamp controller 2 to appropriately set up the light distribution angle, even when the traveling road is a curved road having a relatively large curvature radius. Thus, the vehicle lamp system 1 of the present invention can provide the driver of the own vehicle with the preferable light distribution patterns along the traveling road of the own vehicle.

Various modifications of the above disclosed embodiments can be made without departing from the scope of the present invention. For example, when the steering angle output from the steering angle sensor 13 exceeds the first threshold 3FT or the second threshold 3ST, cases where the vehicle lamp controller 2 can gradually vary the light distribution angle in accordance with the steering angle input into the interface controller 14 have been described. The initial light distribution angle 30IA is not necessarily set up at zero degree as shown in FIG. 4, and the initial light distribution angle 30IA can be set up at a larger angle than the zero angle in accordance with the image data and the like input into the interface controller 14. In this case, the light distribution angle can be set up at a settled direction from the initial light distribution angle 30IA, which is set up at the larger angle than the zero angle.

In the above exemplary embodiment, the vehicle lamp system is described as an exemplary case where the present invention applies to Adaptive Front-Lighting System (AFS) such that forms the light distribution patterns along the traveling direction of the own vehicle. However, the vehicle lamp system 1 of the present invention can also apply to Adaptive Driving Beam (ADB) system, which can set up a variable light-emitting range of a high beam in accordance with other vehicles located in the forward direction of the own vehicle, pedestrians, etc.

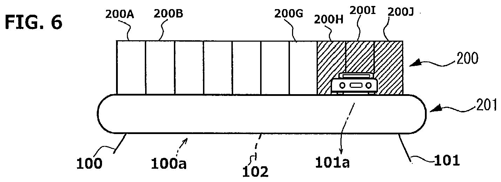

FIG. 6 is a schematic diagram depicting an exemplary light distribution pattern formed by the vehicle lamp system 1 when the lamp system 1 is used as an ADB system. The vehicle lamp system 1 can form a high beam 200 and a low beam 201 in the traveling direction of the own vehicle when the own vehicle travels on the traveling road 100a, which is located between the first white line 100 and the center line 102. The high beam 200 can include a plurality of light distribution regions, for example, 200A, 200B, to ... 200G, 200H, 200I and 200J, where the vehicle lamp system 1 independently and selectively can emit light on each of the light distribution regions.

When the vehicle lamp controller 2 detects an oncoming vehicle on the oncoming lane 101a located between the center line 102 and the second white line 101, the vehicle lamp controller 2 can turn off the light on 200H, 200I and 200J of the high beam 200 so as not to provide the oncoming vehicle with a glare type light, and can turn on the light on 200A to 200G of the high beam 200 in addition to the low beam 201 so as to provide the driver of the own vehicle with the preferable light distribution patterns. A headlight controller and a vehicle headlight system, which can independently select the light distribution regions, is disclosed in Patent Document No. 5 (U.S. Patent No. 9, 738, 214) owned by Applicant of the present invention. Accordingly, details of the vehicle lamp system used as the ADB system is abbreviated here.

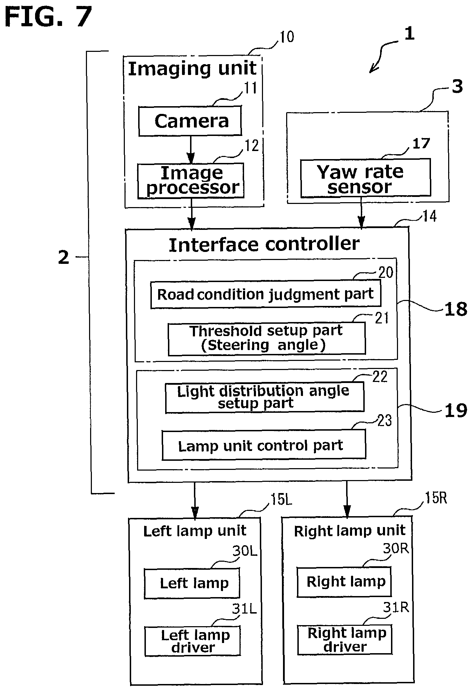

In the exemplary embodiment described above, the steering angle sensor 13 is used as the traveling angle-sensing part 3. A yaw rate sensor 17 can also be used as the traveling angle-sensing part 3 in place of the steering angle sensor 13 as shown in FIG. 7. The yaw rate sensor 17 can detect a revolution speed (yaw rate) in the horizontal direction of the own vehicle with reference to a vertical axis, which crosses a barycenter of the own vehicle, and can be used for antiskid brake system (ABS). Accordingly, because the yaw rate sensor 17 is frequently incorporated into the own vehicle in common with the steering angle sensor 13, each of the yaw rate and the steering angle can also be input from the own vehicle.

When the yaw rate sensor 17 is used as the traveling angle-sensing part 3 in place of the steering angle sensor 13, the threshold setup part 21 can set up, for example, yaw rate 2.8 degrees/second as the first threshold instead of the steering angle 8 degrees, and also can set up 3.8 degrees/second as the second threshold instead of the steering angle 12 degrees. In these cases, when the yaw rate exceeds the first threshold of 2.8 degrees/second, the light distribution angle setup part 22 can set up the light distribution angle in accordance with the solid line shown in FIG. 4.

Similarly, when the yaw rate exceeds the second threshold of 3.8 degrees/second, the light distribution angle setup part 22 can set up the light distribution angle in accordance with the dotted line shown in FIG. 4. Therefore, the vehicle lamp system 1 using the yaw rate sensor 17 can also provide the drivers of the own vehicle with the preferable light distribution patterns along the traveling road of the own vehicle.

In the above-described embodiments, the imaging unit 10 is employed as an exemplary method for detecting whether the traveling road of the own vehicle is the straight road or the curved road. The vehicle lamp system 1 cannot be limited to the imaging unit 10. By associating the imaging unit 10 with a millimeter-wave radar, a light detection and ranging (LiDAR) and the like, which may measure a distance between the own vehicle and the things such as vehicles moving in a frontward direction of the traveling road of the own vehicle, a guardrail, etc., the imaging unit 10 can improve a recognition accuracy thereof.

In addition, the vehicle lamp system 1 can detect whether the traveling road is the straight road or not by using data output from a car navigation system. In this case, when the data output from the car navigation system includes traveling road data such that the traveling road is the straight road or the carved road, the vehicle lamp system 1 can detect whether the traveling road is the straight road or not by detecting a location of the own vehicle using data output from a global positioning system (GPS) and by detecting whether the traveling road from the location of the own vehicle is the straight road or the curved road using the traveling road data. Thereby, the vehicle lamp system 1 can replace the imaging unit 10 with the car navigation system incorporated into the own vehicle. Accordingly, the vehicle lamp system 1 can be configured with a simple structure.

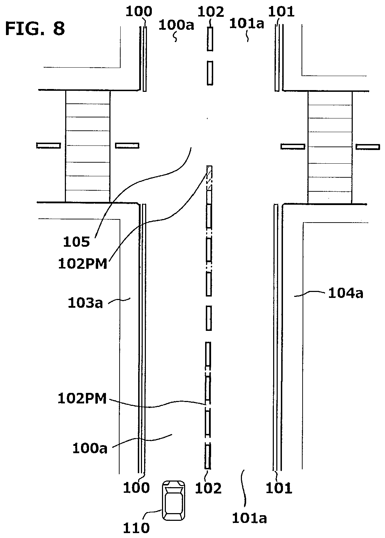

Next, an exemplary method for varying the second threshold will now be described with reference to FIG. 8. FIG. 8 shows a top view when the own vehicle 110 moves toward an intersection 105 on the traveling road 100a located between the first white line 100 and the center line 102. The vehicle lamp system 1 incorporated into the own vehicle 110 can detect whether the traveling road 100a is the straight road or not by a pattern matching method. More specifically, the vehicle lamp controller 2 can detect whether the traveling road 100a is the straight road or not by sequentially comparing the center line 102 in the image data output from the imaging unit 10 with a dot-line-referenced pattern 102PM, which includes four dotted lines as shown in FIG. 8.

When the own vehicle travels on the straight road, a state such that the center line 102 in the image data output from the imaging unit 10 matches with the dot-line-referenced pattern 102PM may be continuously continued. In this case, the interface controller 14 can vary the second threshold at a larger value than the setup second threshold such as 12 degrees when using the steering angle sensor 13 and 3.8 degrees/second when using the yaw rate sensor 17, etc. For example, when the vehicle lamp system 1 includes the steering angle sensor 13, the threshold setup part 21 can change the second threshold from 12 degrees to 18 degrees, and when the vehicle lamp system 1 includes the yaw rate sensor 17, the threshold setup part 21 can change the second threshold from 3.8 degrees/second to 5.7 degrees/second.

When vehicles coming from a backward direction of the own vehicle overtakes the own vehicle and squeezes in front of the own vehicle from a rightward direction, the drivers of the own vehicle may accidentally turn the steering wheel in a leftward direction of the own vehicle. However, the vehicle lamp controller 2 may maintain the initial light distribution angle 30IA so as not to direct the light distribution angle toward a first walkway 103a located adjacent the first white line 100, because the threshold setup part 21 varies the second threshold at the larger value than the setup second threshold.

When a motorcycle coming from the backward direction of the own vehicle overtakes the own vehicle and squeezes in front of the own vehicle from a leftward direction, the drivers of the own vehicle may accidentally turn the steering wheel in a rightward direction of the own vehicle. However, the vehicle lamp controller 2 may maintain the initial light distribution angle 30IA so as not to direct the light distribution angle toward a second walkway 104a located adjacent the second white line 101, because the threshold setup part 21 varies the second threshold at the larger value than the setup second threshold.

As the own vehicle approaches the intersection 105, the center line 102 in the image data output from the imaging unit 10 becomes unable to match with the dot-line-referenced pattern 102PM. Only three dotted line 102, which matches with the dot-line-referenced pattern 102PM (four dotted line) near the intersection 105, is shown in FIG. 8. In this case, the interface controller 14 can vary the second threshold at a smaller value than the setup second threshold such as 12 degrees when using the steering angle sensor 13 and 3.8 degrees/second when using the yaw rate sensor 17, etc. For example, when the vehicle lamp system 1 includes the steering angle sensor 13, the threshold setup part 21 can change the second threshold from 12 degrees to 10 degrees, and when the vehicle lamp system 1 includes the yaw rate sensor 17, the threshold setup part 21 can change the second threshold from 3.8 degrees/second to 3.2 degrees/second. Additionally, the interface controller 14 can also vary the second threshold at the same value as the first threshold such as 8 degrees and 2.6 degrees/second when the vehicle lamp system 1 includes the yaw rate sensor 17.

In these cases, when the own vehicle turns a left at the intersection 105, the interface controller 14 can smoothly vary the light distribution angle from the first threshold, which is used for the curved road, even when the own vehicle travels toward the intersection 105 on the straight roar. When the own vehicle moves straight ahead, the interface controller 14 can maintain the initial light distribution angle 30IA, even when the own vehicle moves in the intersection 105 because the vehicle practically moves straight ahead.

Various modifications of the above disclosed embodiments can be made without departing from the scope of the presently invention. For example, cases where the road condition judgement part 20 detects whether the traveling road of the own vehicle is the straight road or the curved road in accordance with the shape of the white lines are described. However, the white lines cannot be limited to the road condition judgment part 20, and the guardrails, the curbstones and the like, which extend along the traveling road of the own vehicle, can be used for detecting whether the traveling road is the straight road or the curved road. In addition, the specific arrangement between components can vary between different applications, and several of the above-described features can be used interchangeably between various embodiments depending on a particular application of the vehicle lamp controller.

While there has been described what are at present considered to be exemplary embodiments of the invention, it will be understood that various modifications may be made thereto, and it is intended that the appended claims cover such modifications as fall within the true scope of the invention. All conventional art references described above are herein incorporated in their entireties by reference.

## Claims

1. A vehicle lamp controller (2) for controlling a light distribution angle of right and left lamp units (15R, 15L) in accordance with a traveling direction of an own vehicle (110) incorporating the lamp units (15R, 15L), the vehicle lamp controller (2) comprising:
a traveling angle-sensing part (3) detecting a traveling angle of the own vehicle (110);
a setup part (18) detecting whether a traveling road of the own vehicle (110) is a straight road or a curved road, variably setting up thresholds, setting up a first threshold (3FT) as one of the thresholds when the traveling road is the curved road, and setting up a second threshold (3ST) as another of the thresholds when the traveling road is the straight road;
a lighting control part (19) outputting a driving signal to the lamp units (15R, 15L) so as to direct the light distribution angle of the lamp units (15R, 15L) toward the traveling direction of the own vehicle (110) when the traveling angle detected by the traveling angle-sensing part (3) is larger than the first threshold (3FT) or the second threshold (3ST);
and **characterized in that** the second threshold (3ST) is set up at a larger value than the first threshold (3FT).

2. The vehicle lamp controller according to claim 1, wherein the traveling angle of the own vehicle is a steering angle or a yaw rate.

3. The vehicle lamp controller according to any one of claim 1 and claim 2, wherein the light distribution angle of the lamp units (15R, 15L) is variably set up depending on a largeness of the traveling angle of the own vehicle (110).

4. The vehicle lamp controller according to claim 3, wherein the light distribution angle of the lamp units (15R, 15L) increases as the traveling angle becomes larger when the traveling angle of the own vehicle (110) exceeds the first threshold (3FT) while the vehicle lamp controller (2) employs the first threshold (3FT), and the light distribution angle increases as the traveling angle becomes larger when the traveling angle of the own vehicle exceeds the second threshold (3ST) while the vehicle lamp controller (2) employs the second threshold (3ST).

5. The vehicle lamp controller according to claim 4, wherein the light distribution angle is set up so as to gradually increase from a common light distribution angle of the first threshold (3FT) and the second threshold (3ST) in an either case where the vehicle lamp controller (2) employs the first threshold (3FT) or where the vehicle lamp controller (2) employs the second threshold (3ST).

6. The vehicle lamp controller according to claim 4, wherein a degree of increase of the light distribution angle is larger in the case where employing the second threshold (3ST) than that where employing the first threshold (3FT).

7. A method for controlling a light distribution angle of right and left lamp units (15R, 15L) in accordance with a traveling direction of an own vehicle (110) incorporating the lamp units (110), wherein the method is to output a driving signal to the lamp units (15R, 15L) so as to direct the light distribution angle of the lamp units (15R, 15L) toward the traveling direction of the own vehicle (110) when a traveling angle is larger than a predetermined threshold, the control method for the lamp units (15R, 15L) comprising:
a first threshold (3FT) employed when the own vehicle (110) travels on the curved road;
a second threshold (3ST) employed when the own vehicle (110) travels on the straight road;
and **characterized in that** the second threshold (3ST) is larger than the first threshold (3FT).

8. A vehicle lamp system including the vehicle lamp controller (2) according to any one of claims 1 to 6, further comprising the lamp units (15R, 15L) controlled by the vehicle lamp controller (2).

9. The vehicle lamp controller (2) according to any one of claims 1 to 6, wherein the second threshold (3ST) varies in operation.

10. The control method for the lamp units (15R, 15L) according to claim 8, wherein the second threshold (3ST) varies in operation.

11. The vehicle lamp system according to claim 9, wherein the second threshold (3ST) varies in operation.
